# EUROPEAN PATENT SPECIFICATION

(11) **EP 2 670 949 B1**
(45) Date of publication and mention of the grant of the patent: **12.08.2015**
(21) Application number: 11782283.3
(22) Date of filing: 25.10.2011
(51) Int. Cl.: E21B 43/26, E21B 47/10

(54) **APPARATUS AND METHODS FOR TRACKING THE LOCATION OF FRACTURING FLUID IN A SUBTERRANEAN FORMATION**
VORRICHTUNG UND VERFAHREN ZUR ORTUNG DES STANDORTS VON FRAKTURIERUNGSFLÜSSIGKEITEN IN EINER UNTERIRDISCHEN FORMATION
APPAREIL ET PROCÉDÉS POUR SUIVRE L'EMPLACEMENT D'UN FLUIDE DE FRACTURATION DANS UNE FORMATION SOUTERRAINE

(30) Priority: 24.10.2011 US 201113279461; 31.01.2011 US 201161437756 P
(43) Date of publication of application: 11.12.2013
(73) Proprietor: Baker Hughes Incorporated, Houston, TX 77019 (US)
(72) Inventor: QU, Qi, Spring, TX 77379 (US); VIPULANANDAN, C., The Woodlands, TX 77381 (US); HOUSTON, Mark, H., Austin, TX 78738 (US)
(74) Representative: Mabey, Katherine Frances
(86) International application number: PCT/US2011/057578
(87) International publication number: WO 2012/106017

(56) References cited:
- WO-A1-2010/068128
- WO-A2-00/29716
- WO-A2-2011/070453
- US-A- 3 818 990
- US-A1- 2006 113 077
- R.W. PAIGE ET AL: "Fracture Measurement Using Hydraulic Impedance Testing", PROCEEDINGS OF SPE ANNUAL TECHNICAL CONFERENCE AND EXHIBITION, 1 January 1992 (1992-01-01), XP55027331, DOI: 10.2523/24824-MS
- R.D. BARREE ET AL: "A Practical Guide to Hydraulic Fracture Diagnostic Technologies", PROCEEDINGS OF SPE ANNUAL TECHNICAL CONFERENCE AND EXHIBITION, 1 January 2002 (2002-01-01), XP55027333, DOI: 10.2523/77442-MS

## Description

### FIELD OF THE DISCLOSURE

The present disclosure relates generally to obtaining information about the location of fractures or fracturing fluid in a subterranean formation.

### BACKGROUND

Current hydraulic fracturing technology used in the oilfield industry typically involves the pumping of large volumes of fracturing fluid into the subterranean formation at pressures above rock-fracturing pressures in order to fracture the rock and increase the subterranean pore space in the rock. Proppants may be included to hold open the fracture cracks to allow the flow-back of hydrocarbons. This fracturing treatment process has been successful in improving the production and recovery rate of hydrocarbons, particularly in unconventional hydrocarbon reservoir formations, such as shale or tight sandstone.

During fracturing treatments, it is beneficial to understand the orientation, dimensions and distribution of the fractures being created. It would also be beneficial to obtain information about the fracturing fluid as it progresses through the formation. This information can be useful, for example, to make necessary changes to the injected fluids in order to enhance stimulation and increase the production of hydrocarbons. Accordingly, there exists a need for improved systems, apparatus and methods for obtaining information about fractures formed or existing in a subterranean formation and/or the fracturing fluid as it advances through the formation.

WO2010/068128 A1 discloses a method for creating a fracture in a subterranean formation having a fluid flow barrier. US2006/113077 A1 discloses a method for well treatment by forming a temporary plug in a fracture, perforation or wellbore in a well penetrating a subterranean formation. WO2011/070453 A2 discloses a technique enabling improvements in hydraulic fracturing treatments on heterogenous reservoirs.

### BRIEF DESCRIPTION OF THE DRAWINGS

The following figures are part of the present specification, included to demonstrate certain aspects of various embodiments of this disclosure and referenced in the detailed description herein:
Figure 1 is a schematic of an example subterranean shale rock formation in which an embodiment of the monitoring technology of the present disclosure is implemented using fracturing fluid that includes purpose-designed additives (PDA) in the form of gelling grout to create a temporary PDA-barrier at four exemplary locations in accordance with an embodiment of the present disclosure; and
Figure 2 is an exploded view of the formation of a PDA-barrier of Figure 1 after a specific time of injection in accordance with an embodiment of the present disclosure.

### BRIEF SUMMARY OF THE DISCLOSURE

The present invention provides a method of determining the location of fracturing fluid in a subterranean formation as claimed in claim 1. In various embodiments, the present disclosure involves methods for providing information about the subterranean formation, such as during hydraulic fracturing. Also disclosed are apparatuses for providing such information. This information can be used, for example, to minimize the volume of fracturing fluid needed, optimize and better control hydraulic fracturing operations, improve stimulation of the production of hydrocarbons, other purposes or a combination thereof.

In many embodiments, the present disclosure involves methods for obtaining information about fractures formed or existing in subterranean formations by tracking the flow patterns, location or propagation of fracturing fluid as it moves through the formation. Also disclosed are apparatuses for obtaining such information. In various embodiments, new monitoring technologies are used for real-time tracking of fracturing fluid propagation in subterranean rock formations. Depending upon the application, the monitoring technologies may include, for example, reflected pressure pulse, active seismic, passive micro- seismic or other acoustic wave (e.g. tomography) monitoring.

In various embodiments, the fracturing fluid is enhanced to allow tracking of the location of the advancing fracturing fluid front, such as in shale rock formations. In many embodiments, the fracturing fluid may be enhanced with purpose-designed additives (PDA). In some embodiments, the PDA may include gelling grout. For example, grouts provided in the fracturing fluid may be used to produce controlled gelled grout barriers to temporarily clog the pathway and stop the advancement of the fracturing fluid fronts. After the barrier is in place, one or more signal may be created and detected to determine the distance and/or location of the barrier or other information about the barrier, fracturing fluid or formation.

Accordingly, the present disclosure includes features and advantages which are believed to enable it to advance underground information gathering technology. Characteristics and potential advantages of the present disclosure described above and additional potential features and benefits will be readily apparent to those skilled in the art upon consideration of the following detailed description of various embodiments.

### DETAILED DESCRIPTION OF PRESENTLY PREFERRED EMBODIMENTS

Characteristics and advantages of the present disclosure and additional features and benefits will be readily apparent to those skilled in the art upon consideration of the following detailed description of exemplary embodiments of the present disclosure and referring to the accompanying figures. It should be understood that the description herein and appended drawings, being of example embodiments, are not intended to limit the claims of this patent application or any patent or patent application claiming priority hereto. On the contrary, the intention is to cover all modifications, equivalents and alternatives falling within the scope of the claims. Many changes may be made to the particular embodiments and details disclosed herein without departing from such scope.

In showing and describing preferred embodiments, common or similar elements are apparent from the figures and/or the description herein. The figures are not necessarily to scale and certain features and certain views of the figures may be shown exaggerated in scale or in schematic in the interest of clarity and conciseness.

As used herein and throughout various portions (and headings) of this patent application, the terms "invention", "present invention" and variations thereof are not intended to mean every possible embodiment encompassed by this disclosure or any particular claim(s). Thus, the subject matter of each such reference should not be considered as necessary for, or part of, every embodiment hereof or of any particular claim(s) merely because of such reference.

Certain terms are used herein and in the appended claims to refer to particular components. As one skilled in the art will appreciate, different persons may refer to a component by different names. This document does not intend to distinguish between components that differ in name but not function. Also, the terms "including" and "comprising" are used herein and in the appended claims in an open-ended fashion, and thus should be interpreted to mean "including, but not limited to ...." Further, reference herein and in the appended claims to components and aspects in a singular tense does not necessarily limit the present disclosure or appended claims to only *one* such component or aspect, but should be interpreted generally to mean *one or more,* as may be suitable and desirable in each particular instance.

In accordance with an embodiment of the present disclosure, purpose-designed additives (PDA) are provided in the fracturing fluid to allow the location of the fracturing fluid in the subterranean formation to be determined or tracked. For example, the PDA may be provided at the front end of the fracturing fluid as it is injected into the formation. At a certain time as the fracturing fluid moves through the formation, the PDA solidifies to form barrier to plug, or block, the advancement of the fracturing fluid.

After the PDA-barrier is in place, one or more signals are generated and detected to determine the distance and/or location of the barrier or other information about the barrier, fracturing fluid or formation. In this embodiment, after the PDA-barrier is created, a pressure spike is provided in the well. In some instances, the increased pressure on the PDA-barrier will generate a signal. For example, the increased pressure on the PDA-barrier may influence the rock immediately surrounding or adjacent to the PDA-barrier, causing a detectable signal to be generated. The influence from the PDA-barrier may, for example, cause rock slippage, destabilization or breakage, creating a signal (e.g. acoustic wave) that is detectable.

For another example, the pressure spike may pierce the PDA-barrier, generating an acoustic energy wave (similar to impact resonance (IR)), reflected pressure pulse, other detectable signal or a combination thereof, that transmits through the subterranean formation and is detected or received by one or more sensors or receivers. For example, the sensors may be pressure transducers, acoustic sensors and/or accelerometers located in an observation borehole.

The receipt of the signal may be used to derive useful information about the PDA-barrier, fracturing fluid or fracture. For example, the arrival time of the acoustic wave, reflected pressure pulse or other signal at the sensor(s) or receiver(s), may be used to determine the distance (e.g. from the well bore) to each PDA-barrier and, thus, the distance to and location of the advancing fracturing fluid front. Other information about the location of the PDA-barrier and fluid front may be derived, such as the direction thereof relative to the sensor(s) or receiver(s). In some embodiments, the release of acoustic energy upon piercing the PDA-barrier may be used for micro-seismic monitoring. Multiple PDA-barriers, and, thus, fracturing fluid fronts, may be monitored in real-time to determine their location and advancement through the formation. After the PDA-barrier has been pierced, the fracturing fluid typically continues to advance through the formation.

The PDA may have any suitable form, chemistry and properties. In some embodiments, the PDA may be designed so that the PDA-barriers possess a minimal thickness needed to reflect the pressure pulse and can be pierced by minimal strain energy. The viscosity of the PDA (and fracturing fluid) is typically dictated based upon the fracturing treatment. The PDA may be designed to be easily removed after the pressure rupture event. For example, the PDA may dissolve or disintegrate upon contact with one or more fluid additives. Such fluid additives may be introduced into the well as a component of the fracturing fluid or subsequently introduced in the formation. Examples of fluid additives that may be useful for disintegrating or breaking up the PDA-barrier are organic and inorganic breakers, oxidizers and enzymes, as well as encapsulated organic and inorganic breakers, oxidizers and enzymes. In some instances, the PDA may be recovered, recycled or reused, such as to create subsequent PDA-barriers. For example, defragmented polymerized structures may be incorporated for reuse of the PDA.

In some embodiments, the PDA is a gelling grout having any suitable form, chemistry and properties capable of being used in one or more of the methods described herein. For example, the gelling grout may have one or more of the following attributes: low water permeability; high gas permeability; predictable and/or controllable gelling time and/or expansion characteristics. If desired, chemical surfactants, such as biodegradable biosurfactants, may be included to assist in controlling gelling.

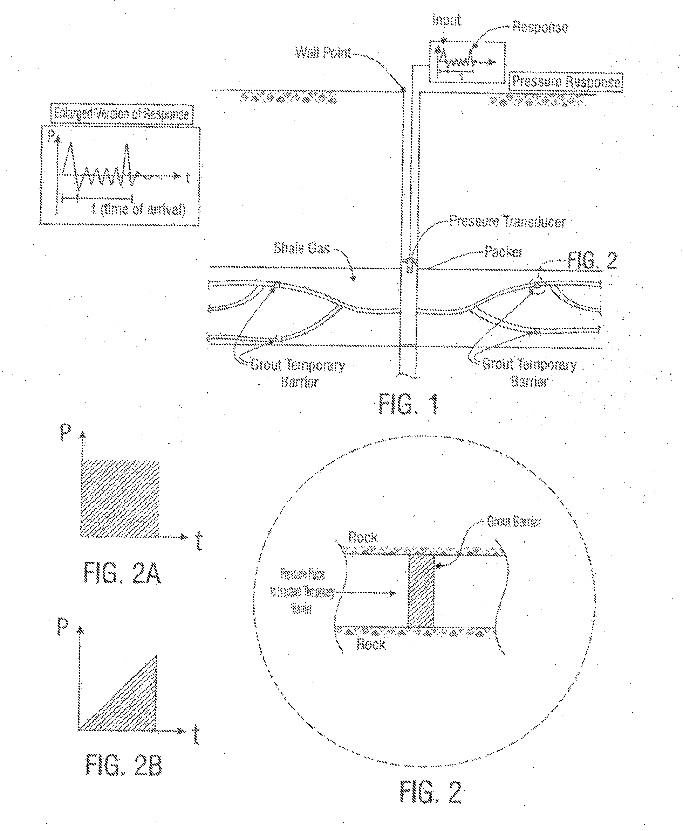

In an exemplary embodiment shown in Figures 1-2, the PDA is a grout disposed at the fracturing fluid front. At a desired time in the advancement of the fracturing fluid, the grout gels or hardens to form a barrier at the depicted locations in four illustrated formation fractures or fracture branches. Thereafter, pressure in the well is increased (Figure 2(a)) sufficient to pierce the gelled grout barrier at each location. The piercing of the gelled grout barrier will generate a reflected pressure pulse (Figure 2(b)), which transmits through the subterranean (rock) formation and is received by one or more sensors (e.g. pressure transducer). An example graph of pressure transducer readings showing an initial pressure increase a pressure pulse is illustrated. The retrieval of the reflected pressure pulse at the sensor(s) may be used to determine location data, such as the direction and/or distance to each gelled grout barrier at the fracturing fluid front. It should be understood that the present disclosure and appended claims are not limited to this particular embodiment.

In some embodiments, the gelling grout may be polymer-based. Certain polymers offer predictable and/or controllable gelling time and curing temperature. For example, polyamide-based grout exhibits a controllable gelling time ranging from a few seconds to several hours. Controlling or changing the gelling time of polymer-based grouts may enhance performance of the grouts in practicing the methods of the present disclosure. For example, by controlling or predicting the gelling time, polymer grouts can be effectively delivered to a target region in the formation without premature gelling based upon the expected time needed to travel to that region. Controlling the curing temperature by use of heat-activated polymers may enhance performance based upon the type of formation surfaces exposed to the grout during advancement through the formation.

For another example, the gelling grout may be acrylamide-based. Acrylamide-based grout may, for example, penetrate more readily, maintain a constant viscosity during injection, have better gel time-control, have adequate strength, have a viscosity and density close to water, or a combination thereof. Acrylamide-based grouts may be hardened with a two-component redox system having one part initiator, or catalyst, and a second part accelerator, or activator. Gelling time of acrylamide-based grouts may be directly influenced by the concentration of catalyst, activator and/or inhibitor and temperature. An exemplary inhibitor used to assist in controlling gelling time is potassium ferricyanide. Exemplary catalysts, or initiators, are peroxide or a persulfate, such as ammonium persulfate. Exemplary activators, or accelerators, are organic compounds, such as triethanolamine, nitrilotrispropionamide, or dimethylaminiopropionitrile.

For another example, the gelling grout may be underivatized guar or derivatized guar, such as hydroxy propyl guar (HPG). Such grouts may exist as cross-linked hydrogels.

The gelling grout may further include a cross-linking agent. Suitable cross-linking agents include organometallic agents, such as titanim or aluminum based cross-linking agents as well as borate ion releasing cross-linking agents. Borate ion releasing cross-linking agents are preferred for low temperatures and organometallic cross-linking agents are preferred for high temperatures. If desired, a multi-functional cross-linking agent may be used to form hydrogels of guar or HPG, rather than simply a cross-linked structure.

For still a further example, the gelling grout may consist of more than one the group including the above polymers and polyurethane, polyethylene and silicate. These grouts may, for example, have one or more of the following attributes: environmentally friendly; biodegradable; have controllable gelling time under various pressures and temperatures. In order to harden the resinous grouts at various pH and temperatures, appropriate catalysts and promoters (oxidizers, enzymes) may be used. The degree of gelation of these grouts may be determined by the enthalpy of the polymerization process and the extent of cross-linking. The gelling temperature and the degree of polymerization of these grouts may have decisive influence on the strength and fracture behavior of the gelled grout barrier. The designed gel permeability may be much higher than shale rock for gas, but low enough to prevent fracturing fluid from permeating through the gelled grout barrier.

## Claims

1. A method of determining the location of fracturing fluid in a subterranean formation accessible through an underground well, the method comprising:
providing purpose-designed additives in the fracturing fluid;
injecting the fracturing fluid with the purpose-designed additives into the formation;
as the fracturing fluid moves through the formation, the purpose-designed additives solidifying to form a barrier in the path of the fracturing fluid, temporarily blocking further advancement of the fracturing fluid through the formation;
**characterised in that** the method further comprises:
providing a pressure spike in the well;
in response to the pressure spike contacting the barrier, at least one signal is generated;
detecting the at least one signal; and
based upon the detection of the at least one signal, determining data about the location of fracturing fluid at or proximate to the location of the barrier.

2. The method of claim 1 further including determining the distance to the location of the barrier location on a real-time basis.

3. The method of claim 1 further including providing the purpose-designed additives at the fracturing fluid front, further wherein the barrier is formed proximate to the fracturing fluid front.

4. The method of claim 3 further including allowing the formation of multiple fracturing fluid fronts and barriers.

5. The method of claim 3 further including the pressure spike piercing the barrier, wherein the piercing of the barrier causing at least one signal to be generated.

6. The method of claim 5 wherein the purpose-designed additives solidify at a desired time, further including, after the barrier is pierced, the fracturing fluid advancing further through the subterranean formation.

7. The method of claim 3 wherein the purpose-designed additives solidify multiple times during advancement of the fracturing fluid through the subterranean formation, allowing multiple successive locations of the fracturing fluid front to be determined.

8. The method of claim 1 further including the purpose-designed additives forming a barrier having a minimal thickness needed to reflect the pressure spike.

9. The method of claim 1 further including removing the purpose-designed additives after the barrier is pierced.

10. The method of claim 1 further including providing at least one sensor or receiver in the well to detect the at least one signal.

11. The method of claim 10 wherein the signal is a reflected pressure pulse, further including using the arrival time of the reflected pressure pulse at the at least one sensor or receiver to determine the distance to the barrier.

12. The method of claim 11 further including determining the direction from the at least one sensor or receiver to the barrier.

13. The method of claim 10 wherein the signal is an acoustic wave.

14. The method of claim 1 further including in response to the pressure spike contacting the barrier, the barrier influencing surrounding rock in the adjacent subterranean formation, the surrounding rock causing at least one detectable signal to be generated.

15. The method of claim 14 wherein at least one signal is generated by failure of the surrounding rock.

16. The method of claim 10 further including purpose-designed additives biodegrading,

17. The method of claim 1 further including providing gelling grout in the purpose-designed additives.

18. The method of claim 17 further including designing the gelling grout to have predictable and/or controllable gelling time, wherein the purpose-designed additives solidify to form the barrier at a certain time.

19. The method of claim 17 further including designing the gelling grout to have predictable and/or controllable expansion characteristics.

## Patentansprüche

1. Verfahren zum Bestimmen der Lage von Fracking-Flüssigkeit in einer unterirdischen Formation, die durch ein Untergrundbohrloch zugänglich ist, wobei das Verfahren umfasst:
Bereitstellen zweckgebundener Zusätze in der Fracking-Flüssigkeit;
Einspeisen der Fracking-Flüssigkeit mit den zweckgebundenen Zusätzen in die Formation;
dass, wenn die Fracking-Flüssigkeit sich durch die Formation bewegt, die zweckgebundenen Zusätze erstarren, um eine Barriere auf dem Pfad der Fracking-Flüssigkeit durch die Formation bilden;
**dadurch gekennzeichnet, dass** das Verfahren des Weiteren umfasst:
Bereitstellen einer Druckspitze im Bohrloch;
dass als Reaktion darauf, dass die Druckspitze die Barriere berührt, zumindest ein Signal erzeugt wird;
Erfassen des zumindest einen Signals; und
basierend auf der Erfassung des zumindest einen Signals, Ermitteln von Daten über die Lage von Fracking-Flüssigkeit bei oder nahe der Lage der Barriere.

2. Verfahren nach Anspruch 1, des Weiteren beinhaltend ein Ermitteln des Abstands zur Lage der Barrierenlage auf Echtzeitbasis.

3. Verfahren nach Anspruch 1, des Weiteren beinhaltend ein Bereitstellen der zweckgebundenen Zusätze an der Fracking-Flüssigkeitsfront, wobei des Weiteren die Barriere nahe der Fracking-Flüssigkeitsfront gebildet ist.

4. Verfahren nach Anspruch 3, des Weiteren beinhaltend ein Ermöglichen der Bildung von mehreren Fracking-Flüssigkeitsfronten und Barrieren.

5. Verfahren nach Anspruch 3, des Weiteren beinhaltend, dass die Druckspitze die Barriere durchsticht, wobei das Durchstechen der Barriere bewirkt, dass zumindest ein Signal erzeugt wird.

6. Verfahren nach Anspruch 5, wobei die zweckgebundenen Zusätze zu einer gewünschten Zeit erstarren, des Weiteren beinhaltend, dass, nachdem die Barriere durchstochen ist, die Fracking-Flüssigkeit weiter durch die unterirdische Formation vordringt.

7. Verfahren nach Anspruch 3, wobei die zweckgebundenen Zusätze mehrere Male während des Vordringens der Fracking-Flüssigkeit durch die unterirdische Formation erstarren, so dass mehrere aufeinanderfolgende Lagen der Fracking-Flüssigkeitsfront ermittelt werden können.

8. Verfahren nach Anspruch 1, des Weiteren beinhaltend dass die zweckgebundenen Zusätze eine Barriere mit einer minimalen Dicke bilden, die notwendig ist, um die Druckspitze zu reflektieren.

9. Verfahren nach Anspruch 1, des Weiteren beinhaltend ein Entfernen der zweckgebundenen Zusätze, nachdem die Barriere durchstochen ist.

10. Verfahren nach Anspruch 1, des Weiteren beinhaltend ein Bereitstellen zumindest eines Fühlers oder Empfängers im Bohrloch, um das zumindest eine Signal zu erfassen.

11. Verfahren nach Anspruch 10, wobei das Signal ein reflektierter Druckpuls ist, des Weiteren beinhaltend ein Verwenden der Ankunftszeit des reflektierten Druckpulses bei dem zumindest einen Fühler oder Empfänger, um den Abstand zur Barriere zu ermitteln.

12. Verfahren nach Anspruch 11, des Weiteren beinhaltend ein Ermitteln der Richtung von dem zumindest einen Fühler oder Empfänger zur Barriere.

13. Verfahren nach Anspruch 10, wobei das Signal eine Akustikwelle ist.

14. Verfahren nach Anspruch 1, des Weiteren beinhaltend, dass, als Reaktion auf die Druckspitze, die die Barriere berührt, die Barriere umgebendes Gestein in der angrenzenden unterirdischen Formation beeinflusst, wobei das umgebende Gestein bewirkt, dass zumindest ein erfassbares Signal erzeugt wird.

15. Verfahren nach Anspruch 14, wobei zumindest ein Signal durch einen Ausfall des umgebenden Gesteins erzeugt wird.

16. Verfahren nach Anspruch 10, des Weiteren beinhaltend dass sich zweckgebundene Zusätze biologisch abbauen.

17. Verfahren nach Anspruch 1, des Weiteren beinhaltend ein Bereitstellen von gelierendem Vergussmaterial in den zweckgebundenen Zusätzen.

18. Verfahren nach Anspruch 17, des Weiteren beinhaltend ein Gestalten des gelierenden Vergussmaterials, so dass es vorhersagbare und/oder kontrollierbare Gelierzeit hat, wobei die zweckgebundenen Zusätze erstarren, um die Barriere zu einer bestimmten Zeit zu bilden.

19. Verfahren nach Anspruch 17, des Weiteren beinhaltend Gestalten des gelierenden Vergussmaterials, so dass es vorhersagbare und/oder kontrollierbare Ausdehnungseigenschaften hat.

## Revendications

1. Procédé de détermination de l'emplacement d'un fluide de fracturation dans une formation souterraine accessible par un puits souterrain, le procédé comprenant les étapes consistant à :
fournir des additifs conçus spécifiquement dans le fluide de fracturation ;
injecter le fluide de fracturation avec les additifs conçus spécifiquement dans la formation ;
à mesure que le fluide de fracturation se déplace à travers la formation, les additifs conçus spécifiquement se solidifiant pour former une barrière dans le trajet du fluide de fracturation, bloquer temporairement tout autre avancement du fluide de fracturation à travers la formation ;
**caractérisé en ce que** le procédé comprend en outre les étapes consistant à :
fournir une pointe de pression dans le puits ;
en réponse à la pointe de pression venant en contact avec la barrière, au moins un signal est généré ;
détecter le au moins un signal ; et
sur la base de la détection du au moins un signal, déterminer des données sur l'emplacement du fluide de fracturation à l'emplacement de la barrière ou à proximité de celle-ci.

2. Procédé selon la revendication 1, comprenant en outre la détermination de la distance à l'emplacement de la barrière en temps réel.

3. Procédé selon la revendication 1, comprenant en outre la fourniture des additifs conçus spécifiquement au niveau du front du fluide de fracturation, dans lequel, en outre, la barrière est formée à proximité du front du fluide de fracturation.

4. Procédé selon la revendication 3, comprenant en outre la possibilité de formation de multiples fronts et barrières du fluide de fracturation.

5. Procédé selon la revendication 3, comprenant en outre le percement de la barrière par la pointe de pression, dans lequel le percement de la barrière entraîne la génération du au moins un signal.

6. Procédé selon la revendication 5, dans lequel les additifs conçus spécifiquement se solidifient à un moment souhaité, comprenant en outre, une fois que la barrière est percée, un autre avancement du fluide de fracturation à travers la formation souterraine.

7. Procédé selon la revendication 3, dans lequel les additifs conçus spécifiquement se solidifient à de multiples reprises au cours de l'avancement du fluide de fracturation à travers la formation souterraine, ce qui permet de déterminer de multiples emplacements successifs du front du fluide de fracturation.

8. Procédé selon la revendication 1, comprenant en outre les additifs conçus spécifiquement qui forment une barrière ayant une épaisseur minimale nécessaire pour refléter la pointe de pression.

9. Procédé selon la revendication 1, comprenant en outre le retrait des additifs conçus spécifiquement une fois que la barrière est percée.

10. Procédé selon la revendication 1, comprenant en outre la fourniture d' au moins un capteur ou d'un récepteur dans le puits pour détecter le au moins un signal.

11. Procédé selon la revendication 10, dans lequel le signal est une impulsion de pression réfléchie, comprenant en outre l'utilisation du temps d'arrivée de l'impulsion de pression réfléchie sur le au moins un capteur ou récepteur pour déterminer la distance à la barrière.

12. Procédé selon la revendication 11, comprenant en outre la détermination de la direction du au moins un capteur ou récepteur à la barrière.

13. Procédé selon la revendication 10, dans lequel le signal est une onde acoustique.

14. Procédé selon la revendication 1, comprenant en outre, en réponse à la pointe de pression venant en contact avec la barrière, la barrière influençant les roches environnantes de la formation souterraine adjacente, la génération d'au moins un signal détectable par les roches environnantes.

15. Procédé selon la revendication 14, dans lequel au moins un signal est généré par défaillance des roches environnantes.

16. Procédé selon la revendication 10, comprenant en outre une biodégradation des additifs conçus spécifiquement.

17. Procédé selon la revendication 1, comprenant en outre la fourniture de coulis de gélification dans les additifs conçus spécifiquement.

18. Procédé selon la revendication 17, comprenant en outre la conception du coulis de gélification afin de disposer d'un temps de gélification prédictible et/ou contrôlable, dans lequel les additifs conçus spécifiquement se solidifient pour former la barrière à un certain moment.

19. Procédé selon la revendication 17, comprenant en outre la conception du coulis de gélification pour disposer de caractéristiques d'expansion prédictibles et/ou contrôlables.
